Europäisches Patentamt

European Patent Office

Office européen des brevets

(11) Publication number: **0 412 496 A2**

# EUROPEAN PATENT APPLICATION

(21) Application number: 90115134.0

(51) Int. Cl.⁵: **A23F 5/10, A23F 3/06**

(22) Date of filing: 07.08.90

(30) Priority: **08.08.89 JP 205345/89**

(43) Date of publication of application:
**13.02.91 Bulletin 91/07**

(84) Designated Contracting States:
**DE ES FR IT NL**

(71) Applicant: **KIRIN BEER KABUSHIKI KAISHA**
**26-1 Jingumae 6-chome**
**Shibuya-ku Tokyo-To(JP)**

(72) Inventor: **Hirao, Hiroshi, C/o Kirin Beer**
**Kabushiki Kaisha**
**26-1 Jingumae 6-chome, Shibuya-Ku**
**Tokyo-To(JP)**
Inventor: **Yamashita, Masao, C/o Kirin Beer**
**Kabushiki Kaisha**
**26-1 Jingumae 6-chome, Shibuya-Ku**
**Tokyo-To(JP)**
Inventor: **Kage, Tsuyoshi, C/o Kirin Beer**
**Kabushiki Kaisha**
**26-1 Jingumae 6-chome, Shibuya-Ku**
**Tokyo-To(JP)**
Inventor: **Morita, Asako, C/o Kirin Beer**
**Kabushiki Kaisha**
**26-1 Jingumae 6-chome, Shibuya-Ku**
**Tokyo-To(JP)**

(74) Representative: **Reichel, Wolfgang, Dipl.-Ing.**
**et al**
**Reichel und Reichel Parkstrasse 13**
**D-6000 Frankfurt am Main 1(DE)**

(54) **Extractable food contained in vessel.**

(57) An extractable food contained in a vessel comprises fine strips of an extractable food in a hermetically sealed vessel to be provided for a beverage by pouring hot water for extraction of its essence, wherein an inside of the vessel is under a state substantially in the absence of oxygen and kept at positive pressure by the injection of an inert gas and/or by a gas generated from the food.

EP 0 412 496 A2

## EXTRACTABLE FOOD CONTAINED IN VESSEL

## BACKGROUND OF THE INVENTION

Field of the Invention

This invention relates to an extractable food contained in a vessel, which can effect steaming sufficiently by improving foaming when extracting its essence by pouring hot water to be provided for a beverage.

Description of the Related Art

In the prior art, fine strips of an extractable food such as coffee, green tea, black tea to be provided for a beverage by extracting its essence by pouring of hot water are commercially available, packed in a highly hermetically sealed vessel, and particularly a highly hermetically sealed vessel, such as a can made of tin-plate or aluminum for the prevention of volatilization of flavor or moisture absorption at ambient temperature.

A typical example of such canned food is coffee. That is so called "regular coffee", and coffee beans roasted and ground to an appropriate particle size are commonly provided contained in cans when it is a product of bulk production or produced in a factory.

The article of a product of such bulk production or product in a factory, particularly coffee, cannot but be inferior in flavor or taste when compared with the so called "just roasted" or "just ground" product, even if considerations may be paid such as removal of oxygen by internal degassing of the vessel during filling in a vessel by degassing under reduced pressure or including a deoxygenating agent in the vessel in order to prevent the deterioration of flavor or taste within the vessel.

One reason is that, since the can is internally degassed under reduced pressure to remove oxygen within the can during can filling, flavor migrates to the atmosphere within the can from regular coffee which has become more susceptible to the dissipation of flavor due to increased surface area resulting from pulverization. This may particularly occur in the case when following the conventional procedure in which coffee beans roasted and ground are filled in a can after dissipating to some extent the gases inevitably generated therefrom.

Another reason why canned regular coffee is not comparable to "just roasted" or "just ground" coffee is that the so called "steaming" cannot be sufficiently effected during the extraction of the essence with hot water. For preparing coffee of good taste, it is insufficient to pass hot water through a layer of coffee beans (roasted and ground, as a matter of course) for a short time, but foaming of the coffee beans layer so as to also receive an action by steam from hot water, namely "steaming" is required. However, since the coffee beans stored in the can degassed under reduced pressure physically adsorbs only a small amount of a gas onto the surface, the foaming cannot occur sufficiently through the adsorbed gas by contact with hot water.

## SUMMARY OF THE INVENTION

An object of the present invention is to solve the above problems, and to accomplish this object by making the hermetically sealed vessel housing coffee beans and the like therein a state substantially in the absence of oxygen and also making the vessel internally positive in pressure by the injection of an inert gas and/or with the gas generated from the extractable food.

Therefore, it is an object of the present invention to provide an extractable food contained in a vessel and comprising fine strips of an extractable food in a hermetically sealed vessel to be provided for a beverage by pouring hot water for extraction of its essence, wherein an inside of the vessel is under a state substantially in the absence of oxygen and kept at positive pressure by the injection of an inert gas and/or by a gas generated from the food.

The extractable food contained in a vessel according to the present invention is under a state substantially in the absence of oxygen within the vessel, and is further enhanced to a positive pressure within the vessel by injecting an inert gas and/or by gases generated from the extractable food, for example, at 0.1 to 10 kg/cm²G. Therefore oxidation with oxygen gas can be prevented, and yet the inert gas can easily be physically adsorbed onto the surface of the fine strips of the food, and also gases such as flavor, etc., may be confined within fine voids or fine pore portions on the surface of the food by the enhanced pressure, without dissipation from the fine strips of the food.

Therefore, the fine strips of the extractable food according to the present invention can foam well when contacted with hot water to effect sufficient "steaming", and also flavors can be migrated efficiently into hot water during contact with hot water, whereby an excellent beverage can be obtained when this is evaluated comprehensively with respect to various important elements of extractable food such as richness and plain feeling, as well as flavor and mildness during drinking and the like.

According to the present invention, a pleasant sensation can be also obtained when the can is opened. Since the can is made positive in pressure, the gases within the can are dissipated quickly from an opened portion when the can is opened, and aroma carried on the gases will reach the nose of the person who opens it, thereby causing a pleasant sensation.

## BRIEF DESCRIPTION OF THE DRAWINGS

Fig. 1 is a graph showing the relationship between the pressure in the can and the value of swollen fine strips, and

Fig. 2 and Fig. 3 are diagrams showing the trial drinking results of the extractable food contained in the vessels of the present invention, in terms of the relationship between the body and feeling, and between mildness and flavor.

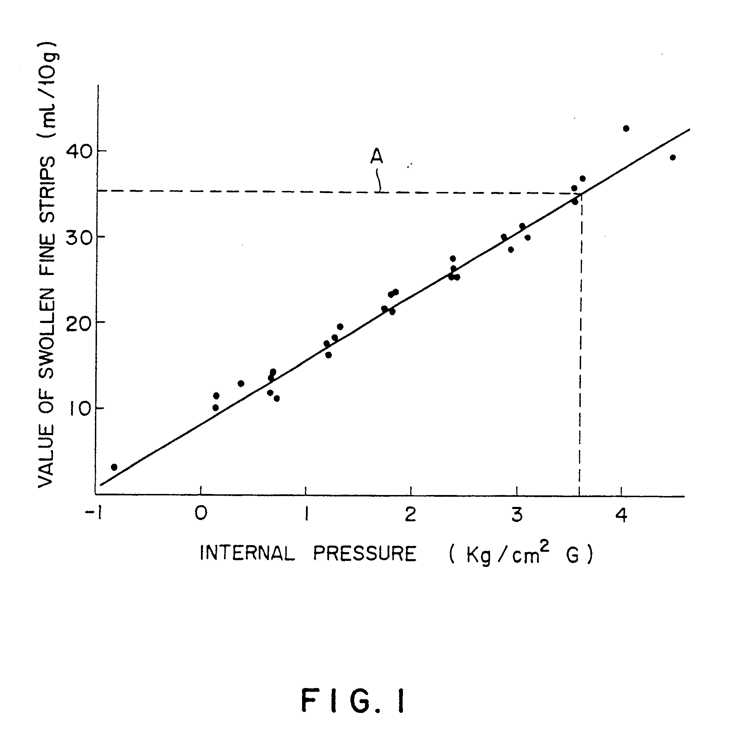

In Fig. 1, A represents the value of swollen fine strips when the coffee just roasted and ground is swollen with hot water.

## DETAILED DESCRIPTION OF THE INVENTION

Extractable food in a vessel

Extractable food

As the extractable food to be used in the form of fine strips, there may be included, for example, coffee, black tea, green tea, barley tea and oolong tea and the like which are formed into fine strips so as to be provided for drink by extraction of their essences by pouring of hot water. Examples of preferred foods include those requiring steaming such as coffee, black tea, green tea, particularly coffee and black tea which can satisfy not only taste but also flavor.

These extractable food strips, in the case of coffee, are processed into a granular or powdery shape, following the steps of harvesting of coffee beans, purification, classification, roasting, formulation, pulverization, etc. until their essence can be extracted merely by pouring hot water onto them.

Hermetically sealable vessel

Any of the hermetically sealable vessels which can maintain a predetermined positive pressure, most typically cans, can be used in the present invention.

As such cans, those made of tin-plate or aluminum may be employed. Cans which can be sealed by conventional rolling method may be used.

Cans may be also provided with pull tabs for easy openability.

Degassing and Atmosphere of vessel

According to the present invention, the vessel is, first under the state substantially in the absence of oxygen.

The phrase "the state substantially in the absence of oxygen" is intended to mean a state of reduced oxygen concentration or oxygen partial pressure to the extent which is realized by using an oxygen absorbing agent or by degassing the vessel to about -400 to -760 mmHg, and preferably to about -600 to -760 mmHg.

Oxygen absorbing agents have been conventionally used under the name of freshness retaining agents for the prevention of deterioration of foods within vessels with oxygen, and, typically, those comprising iron/iron oxide powder, etc.

Gas sealing

Inert gas

After the extractable food fine strips are filled in the above-mentioned vessel, it may be optionally important that the internal pressure of the vessel be enhanced to a specific pressure by injecting an inert gas.

As the inert gas, nitrogen gas, carbon dioxide gas, helium gas, etc. or a gas mixture thereof can be employed. It is preferable to use carbon dioxide gas or nitrogen gas, particularly carbon dioxide gas.

When injecting the inert gas, the vessel is preferably maintained under reduced pressure, and such reduced pressure be usually realized during internal degassing of the vessel.

Sealing

Sealing of the inert gas may be practiced, for example, by a seamer during sealing of the vessel, and the inert gas be injected under a pressure of 0.1 to 10 kg/cm$^2$G, preferably 0.1 to 6 kg/cm$^2$G at ambient temperature (20°C) into the hermetically closed vessel.

The inert gas injected under such pressure may be considered to be physically adsorbed onto the surface of the fine strips of the food, or to confine gases such as flavor into the fine voids or fine pores on the surface of the strips through enhanced pressure, whereby volatilization of flavor can be prevented.

As the internal pressure in the hermetically sealed vessel becomes lower, steaming as mentioned above tends to become insufficient, whereby extraction of the essence cannot be done sufficiently. On the contrary, if the internal pressure is in excess of 10 kg/cm$^2$G, the material of the can must be changed so as to stand such pressure, and the danger will be undesirably increased when the can is heated.

Extraction

Opening

By opening the lid, for example, by pulling the above-mentioned pull tab, the flavor of the extractable food confined internally of the hermetically sealed vessel is released from the enhanced pressure to be liberated together with the internal gas into the air. Then, one who has opened the can can sufficiently taste its aroma. However, the flavors adsorbed onto the surface or within fine pores may remain as such in the fine strips.

Hot water extraction

By pouring hot water generally at 50 to 100°C onto the fine strips of the extractable food, the inert gas and flavors sealed in the fine strips are liberated to ensure improved foaming, and the foam will not disappear abruptly together with aroma but can be maintained for a certain period of time. Therefore, extraction by steaming of the fine strips can be sufficiently effected.

In conventional commercially available extractable food fine strips without enhancement of a pressure within the vessel (rather under reduced pressure), the swelling value of fine strips is about 1.5 to 7 ml/10 g as shown in Comparative Examples 1 to 4. On the other hand, in the fine strips of the present invention, the swelling value of fine strips becomes about 15 to 70 ml/10 g as shown in Example 1. Since the swelling value of just roasted or ground beans is about 35 ml/10 g, the internal pressure of 3.6 kg/cm²G or higher will make the swelling value of fine strips greater than that of just roasted or ground beans and therefore more essence can be extracted.

Thus, the essence extracted by use of the canned fine strips of the present invention has a richness of body, good plain feeling, mildness and good bitterness.

The invention is illustrated in more detail with reference to the following examples.

Example 1

Roasted coffee beans made by Cafés Suavor Japon K.K. were ground to a size of 200 to 1000 μm, and were left standing for 2 days to dissipate $CO_2$.

The resultant beans were then filled in a can made of tin-plate of 560 ml inner volume.

When the pressure within the can was 0.5 kg/cm² or higher, 0 to 7 g of dry ice was put into the can in order to control. the internal pressure. On the other hand, when the pressure was equal to atmospheric pressure (0 kg/cm²G) or lower, the beans were filled under reduced pressure, and further a freshness retaining agent "Ageless E-500" (oxygen absorption amount: 50 cc, carbon dioxide absorption amount: 500 cc, available from Mitsubishi Gas Chemical K.K.) was put into the can as a carbon dioxide absorbing agent in order not to make the pressure positive with the $CO_2$ generated from the coffee beans.

The can was left standing in a thermostatic chamber at 20° C for one week, and then opened while measuring the inner pressure of the can.

35 g of this coffee powder (3 minutes after opening) was taken out in a 250-ml measuring cylinder, then 70 ml of hot water at 85° C was poured onto the coffee to measure the swelling amount thereof.

The results are shown in Fig. 1. The swelling amount was calculated according to the equation shown below:

$$\text{Swelling Value} = \frac{(\text{Swelling volume}) - (\text{Bulk volume of coffee powder})}{(\text{Weight of coffee powder})}$$

Swelling volume: bulk volume after pouring of hot water
Bulk volume of coffee: bulk volume before pouring of hot water

From Fig. 1, it can be understood that the swelling value is proportional to the internal pressure of the can.

Since the swelling value of just roasted or ground beans was about 35-fold, this corresponds to the swelling value when the internal pressure of the can is 3.6 kg/cm²G (shown as A in Fig. 1).

Comparative Example 1

Commercially available coffee cans from various companies were left standing in a thermostatic chamber at 20° C over one night and day, and the internal pressure of the cans were measured. Also, 35 g each of the coffee was placed in a 250-ml measuring cylinder, 70 ml of hot water at 85° C was poured thereon, and the swelling value was measured.

The results are shown in Table 1.

Table 1

| Produot No. | Manufacturer | Pressure within can (mmHg) | Swelling value (ml/10 g) |
|---|---|---|---|
| 1 | A | -573 | 1.5 |
| 2 | B | -125 | 7.0 |
| 3 | C | -85 | 3.4 |
| 4 | D | -85 | 2.8 |

Example 2 and Comparative Example 2

Cans made by Daiwa Seikan K.K. (560 ml volume) were filled 190 g of coffee powder immediately after grinding and with a particle size distribution of 200 to 1000 $\mu$m which was canned by a special seamer (FCH-A type vacuum-gas injection seaming machine, Toho Sangyo). Freshness retaining agents were put into some samples. The freshness retaining agents were Ageless E (absorbing $O_2$ and $CO_2$) or Ageless Z (absorbing $O_2$) which are available from Mitsubishi Gas Chemical.

When inert gas was injected after degassing internally of the can, the reduced pressure degree was -650 mmHg in gauge pressure, and the gas was injected to reach atmospheric pressure.

These samples were left standing in a thermostatic chamber at 40°C for one month.

The results are shown in Table 2.

Table 2

| No. | Pressure within vessel | Sealed gas (gas name) | Ageless |
|---|---|---|---|
| 1 | Reduced | None | Added (Ageless E) |
| 2 | Reduced | None | None |
| 3 | Reduced | Injected ($CO_2$) | Added (Ageless Z) |
| 4 | Reduced | Injected ($CO_2$) | None |
| 5 | Reduced | Injected ($N_2$) | Added (Ageless Z) |
| 6 | Reduced | Injected ($N_2$) | None |
| 7 | Not reduced | None | Added (Ageless Z) |
| 8 | Not reduced | None | None |
| 9 | Just roasted, ground coffee powder | | |

The above samples were opened, and 20 g of coffee powder was extracted with a paper filter (made by Melita K.K.) to obtain 400 g of coffee extract, which was trially drunk.

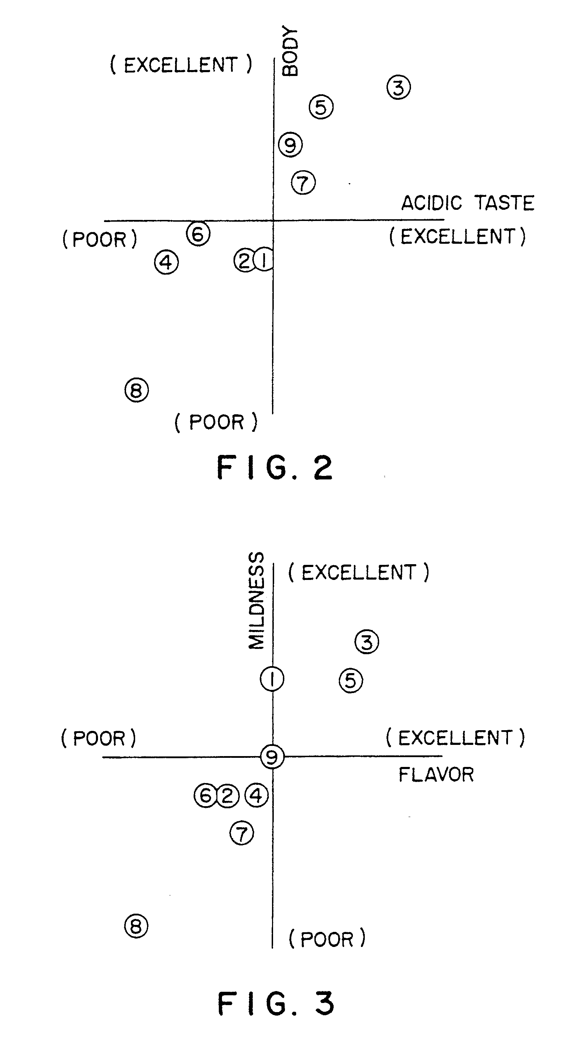

The results are shown in Table 3 and Figs. 2 and 3.

Table 3

| No. | 1 | 2 | 3 | 4 | 5 | 6 | 7 | 8 | 9 |
|---|---|---|---|---|---|---|---|---|---|
| Internal Pressure of can on opening (mmHg) | -300 | 147 | 550 | 570 | 560 | 594 | 390 | 550 | - |
| Flavor on can opening | +1 | -1 | +5 | -1 | +3 | -3 | +1 | -10 | -2 |
| Richness of body | -2 | -2 | +7 | -2 | +6 | -1 | +2 | -5 | +4 |
| Mildness | +4 | -2 | +6 | -1 | +4 | -2 | -4 | -9 | 0 |
| Acidic taste (plain feeling) | -1 | -1 | +8 | -7 | +3 | -5 | +2 | -9 | +1 |
| Sweetness | 0 | 0 | 0 | -3 | 0 | -3 | -1 | -6 | 0 |
| Bitterness | +1 | +2 | +4 | -2 | +3 | +1 | 0 | -6 | +6 |
| Harshness | -2 | -2 | +2 | -1 | +2 | 0 | 0 | -5 | -2 |
| Flavor on drinking | 0 | -3 | +6 | -2 | +5 | -4 | -2 | -9 | 0 |
| Rating | +1 | -9 | +38 | -19 | +26 | -17 | -2 | -59 | +7 |

## Claims

1. An extractable food contained in a vessel comprising fine strips of an extractable food in a hermetically sealed vessel to be provided for drink by pouring hot water for the extraction of its essence, wherein the inside of the vessel is under a state substantially in the absence of oxygen and kept at positive pressure by the injection of an inert gas and/or by a gas generated from the food.

2. An extractable food contained in a vessel according to claim 1, wherein the state substantially in the absence of oxygen is produced by degassing internally of the vessel before injection of an inert gas and/or by addition of an oxygen absorbing agent into the vessel.

3. An extractable food according to claim 1 or 2, wherein the inert gas is carbon dioxide and/or nitrogen gas.

4. An extractable food contained in a vessel according to any one of claims 1 to 3, wherein the positive pressure is 0.1 to 10 kg/cm²G.

5. Canned coffee, comprising roasted and ground coffee beans housed within a can which is made positive in internal pressure by injection of an inert gas and/or with the gas generated from the coffee beans under the state substantially in the absence of oxygen.

6. A method for preparing an extractable food contained in a hermetically sealed vessel to be provided for drink by pouring hot water for the extraction of its essence, comprising the steps of:

maintaining the inside of the vessel under a state substantially in the absence of oxygen, and

making the inside of the vessel at a positive pressure by injection of an inert gas and/or by a gas generated from the food.

# FIG. 1

F I G. 2

F I G. 3